# EUROPÄISCHE PATENTSCHRIFT

(11) **EP 1 879 778 B1**
(45) Veröffentlichungstag und Bekanntmachung des Hinweises auf die Patenterteilung: **15.12.2010**
(21) Anmeldenummer: 06724749.4
(22) Anmeldetag: 06.05.2006
(51) Int. Cl.: B60T 10/02

(54) **VERFAHREN ZUR STEUERUNG UND/ODER REGELUNG DER FAHRZEUGGESCHWINDIGKEIT BEI EINEM FAHRZEUG, WELCHES EINEN RETARDER AUFWEIST**
METHOD FOR CONTROLLING AND/OR REGULATING THE VEHICLE SPEED OF A VEHICLE WHICH IS PROVIDED WITH A RETARDER
PROCEDE POUR COMMANDER ET/OU REGULER LA VITESSE D'UN VEHICULE PRESENTANT UN RALENTISSEUR

(30) Priorität: 11.05.2005 DE 102005021713
(43) Veröffentlichungstag der Anmeldung: 23.01.2008
(73) Patentinhaber: ZF Friedrichshafen AG, 88038 Friedrichshafen (DE)
(72) Erfinder: REISCH, Bernhard, 88316 Isny (DE); SCHMIDTNER, Peter, 88131 Lindau (DE)
(86) Internationale Anmeldenummer: PCT/EP2006/004264
(87) Internationale Veröffentlichungsnummer: WO 2006/119937

(56) Entgegenhaltungen:
- EP-A- 0 336 913
- EP-A- 1 288 056
- DE-A1- 4 420 116
- DE-A1- 10 142 274
- DE-A1-102004 048 121

## Beschreibung

Die vorliegende Erfindung betrifft ein Verfahren zur Steuerung und/oder Regelung der Fahrzeuggeschwindigkeit bei einem Fahrzeug, welches einen Retarder aufweist, gemäß dem Oberbegriff des Patentanspruchs 1.

Heutzutage werden zur Erhöhung der Sicherheit und des Komforts für den Fahrer verstärkt Fahrerassistenzsysteme eingesetzt. Darunter fallen Verfahren zur Einhaltung einer vorgegebenen Sollgeschwindigkeit, welche die Bremssysteme und den Motor derart beeinflussen, dass die Fahrzeuggeschwindigkeit einen bestimmten Wert nicht über- bzw. unterschreitet. Hierfür werden Bremsomat- bzw. Tempomateinrichtungen eingesetzt.

Beispielsweise beschreibt die DE 44 20 116 A1 der Anmelderin ein Verfahren zur Vermeidung der Überschreitung einer vorgegebenen Sollgeschwindigkeit eines Kraftfahrzeugs mit Betriebsbremsen und zusätzlichen Verzögerungseinrichtungen beim Fahren hügelabwärts, bei dem Schubbetrieb registriert wird und beim Umschalten auf Schubbetrieb die Momentangeschwindigkeit als Sollgeschwindigkeit gespeichert wird, wobei die zusätzlichen Verzögerungseinrichtungen einzeln oder in Kombinationen derart gesteuert werden, dass die Momentangeschwindigkeit die Sollgeschwindigkeit nicht überschreitet.

Des weiteren ist in der EP 0 336 913 A2 ein Verfahren und eine Anordnung zum Halten einer konstanten Geschwindigkeit im Gefälle offenbart. Im Rahmen des Verfahrens wird die Bremse vom Fahrer aktiviert, wobei die niedrigste Geschwindigkeit, die das Fahrzeug während des Bremsvorganges erreicht, als Zielwert in einer Kontrolleinheit gespeichert wird. Die unterschiedlichen Bremssysteme des Fahrzeugs werden über das Bremspedal gesteuert, wobei, je stärker das Bremspedal gedrückt wird, um so stärker die Bremswirkung eines vorhandenen Retarders hinzugeschaltet wird. Zudem ist ein Geschwindigkeits-Kontrollsystem vorgesehen, das Retarder und Auspuffbremse derart steuert, dass die aktuelle Geschwindigkeit der Zielgeschwindigkeit durch Aktivierung aller Bremsen angenähert wird. Wenn zudem der Fahrer das Bremspedal loslässt, wird die Geschwindigkeit gehalten, bis wieder beschleunigt wird.

Des weiteren ist aus der DE 101 42 274 A1 der Anmelderin ein Verfahren zur Steuerung und/oder Regelung der Fahrzeuggeschwindigkeit in Kombination mit einer Bremsomat- und/oder eine Tempomateinrichtung bekannt, im Rahmen dessen die Bremsomat-Sollgeschwindigkeit und/oder die Tempomat-Sollgeschwindigkeit und/oder der Offset zwischen der Bremsomat-Sollgeschwindigkeit und der Tempomat-Sollgeschwindigkeit dynamisch verändert wird.

Bei den aus dem Stand der Technik bekannten Verfahren zur Geschwindigkeitsregelung, die in Verbindung mit Retardern eingesetzt werden (Bremsomat-Funktion), besteht das Problem, dass bei Überschreiten der gespeicherten Sollgeschwindigkeit die Fahrzeuggeschwindigkeit nicht sofort konstant gehalten werden kann, sondern das Fahrzeug erst noch weiter beschleunigt, bis es durch die Bremswirkung des Retarders wieder auf die gespeicherte Sollgeschwindigkeit zurückgeholt wird. Ursache hierfür ist zum einen die Massenträgheit des Fahrzeugs, welche nur einen langsamen Abbau der Beschleunigung ermöglicht und zum anderen die sich nur langsam aufbauende Bremswirkung des Retarders.

In nachteiliger Weise kann der bei derartigen Situationen auftretende Überschwinger in der Fahrgeschwindigkeit in Abhängigkeit von verschiedenen Randbedingungen, beispielsweise der Topographie, der Fahrzeugbeschleunigung, des Fahrzeuggesamtgewichtes und/oder des aktuellen Bremsvermögens des Retarders mehrere km/h betragen.

Eine typische Situation für einen großen Überschwinger in der Fahrgeschwindigkeit entsteht, wenn ein schweres Fahrzeug in starkem Gefälle abgebremst werden bzw. eine vorgegebene Sollgeschwindigkeit halten soll. Ein derartig großer Überschwinger in der Fahrgeschwindigkeit stellt ein unkomfortables Verhalten dar, was in gefährlichen Situationen resultieren kann. Zudem kann es hierbei vorkommen, dass für den Fall, dass die Geschwindigkeitsregelung des Retarders auch als Geschwindigkeitsbegrenzer dient, die maximal zulässige Fahrzeuggeschwindigkeit überschritten wird.

Der vorliegenden Erfindung liegt die Aufgabe zugrunde, ein Verfahren zur Steuerung und/oder Regelung der Fahrzeuggeschwindigkeit bei einem Fahrzeug, welches einen Retarder aufweist, anzugeben, mittels dessen die aus dem Stand der Technik bekannten Nachteile vermieden werden. Insbesondere sollen durch das erfindungsgemäße Verfahren die Überschwinger in der Fahrgeschwindigkeit bezüglich einer vorgegebenen Sollgeschwindigkeit beim Zuschalten des Retarders noch besser minimiert bzw. vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, den Retarder vor Erreichen der gespeicherten Sollgeschwindigkeit zuzuschalten, damit er vor Erreichen der gespeicherten Sollgeschwindigkeit seine Bremswirkung aufbauen und die Beschleunigung des Fahrzeugs reduzieren kann.

Erfindungsgemäß wird vorgeschlagen, den Retarder vor Erreichen der Sollgeschwindigkeit derart zu steuern, dass, wenn die Sollgeschwindigkeit erreicht wird, die Fahrzeugbeschleunigung einem definierten Wert entspricht, der 0 m/s² beträgt.

Im Rahmen des erfindungsgemäßen Verfahrens wird vorgeschlagen, vor Erreichen der Sollgeschwindigkeit die aktuelle Fahrgeschwindigkeit als temporäre Sollgeschwindigkeit zu setzen und diese mittels einer definierten Funktion, beispielsweise linear und vorzugsweise stufenlos, auf die ursprünglich gespeicherte Sollgeschwindigkeit zu führen.

Die lineare Annäherung entspricht einer konstanten maximal zulässigen Fahrzeugbeschleunigung, die so gewählt ist, dass bei Erreichen der ursprünglich gespeicherten Sollgeschwindigkeit der Geschwindigkeitsüberschwinger minimal ausfällt. Je nach Steigung der Beschleunigungskurve kann die beim Erreichen der Sollgeschwindigkeit erzielbare Beschleunigung vernachlässigbar klein sein.

Im Rahmen einer vorteilhaften Weiterbildung ist vorgesehen, die lineare Annäherung an die ursprünglich gespeicherte Sollgeschwindigkeit durch eine nicht lineare Annäherung zu ersetzen; hierbei wird die vorgegebene maximale Beschleunigung langsam auf Null reduziert. Je geringer die Differenz zwischen der aktuellen Geschwindigkeit und der Sollgeschwindigkeit ist, desto stärker wird die Beschleunigung reduziert, so dass bei Erreichen der Sollgeschwindigkeit die Beschleunigung den Wert Null annimmt, was in der Vermeidung eines Überschwingers resultiert.

Gemäß der Erfindung wird die als temporäre Sollgeschwindigkeit gesetzte aktuelle Fahrgeschwindigkeit nur dann auf die ursprünglich gespeicherte Sollgeschwindigkeit geführt, wenn die aktuelle Fahrgeschwindigkeit größer als die linear bzw. nichtlinear steigende temporäre Sollgeschwindigkeit ist, d.h., wenn der Retarder gerade bremst. Für den Fall, dass die aktuelle Geschwindigkeit zu langsam oder gar nicht steigt, darf gemäß der Erfindung die temporäre Sollgeschwindigkeit nicht auf die gespeicherte Sollgeschwindigkeit geführt werden, sondern es wird als temporäre Sollgeschwindigkeit entweder die aktuelle Fahrgeschwindigkeit oder eine Geschwindigkeit zwischen der aktuellen Fahrgeschwindigkeit und der gespeicherten Sollgeschwindigkeit gesetzt.

Wenn bei abbremsendem Fahrzeug und Unterschreiten der ursprünglich gespeicherten Sollgeschwindigkeit die Retarder-Geschwindigkeitsregelung abschaltet, ist der Zuschaltpunkt des Retarders bzw. die temporäre Sollgeschwindigkeit auf einen Wert unterhalb der gespeicherten Sollgeschwindigkeit zu setzen. Dieser Wert kann der aktuellen Fahrgeschwindigkeit oder einem definierten Wert zwischen der aktuellen Fahrgeschwindigkeit und der gespeicherten Sollgeschwindigkeit entsprechen.

Erfindungsgemäß ist der temporäre Sollgeschwindigkeitswert stets größer als eine eventuell gesetzte Tempomatgeschwindigkeit, um Konflikte zwischen der Tempomat- und der Bremsomatfunktionalität zu vermeiden, welche zu einem erhöhten Treibstoffverbrauch führen würden.

Im Rahmen einer vorteilhaften Weiterbildung ist vorgesehen, dass die Retardersteuerung aktuelle Motorinformationen, beispielsweise Motormoment und/oder Lastinformation überwacht und gegebenenfalls den Retarder abschaltet oder den Sollgeschwindigkeitswert der Retarder-Geschwindigkeitsregelung anhebt. Alternativ kann auch vorgesehen sein, dass die Retardersteuerung in Abhängigkeit von Motorinformationen in die Motorsteuerung eingreift, beispielsweise, um das Motormoment zu reduzieren und/oder die gesetzte Tempomatgeschwindigkeit zu senken.

Durch die erfindungsgemäße Konzeption wird ein harmonisches und komfortableres Verhalten erzielt, da die Überschwinger in der Fahrgeschwindigkeit beim Zuschalten der Retarder-Geschwindigkeitsregetung weitgehendvermieden werden. Zudem wird ein besseres Regelverhalten der Geschwindigkeitsregelung durch ein sanfteres Zuschalten des Retarders im Rahmen der Geschwindigkeitsregelung realisiert.

Die Erfindung wird im Folgenden anhand der beigefügten Figuren beispielhaft näher erläutert.

Es zeigt:

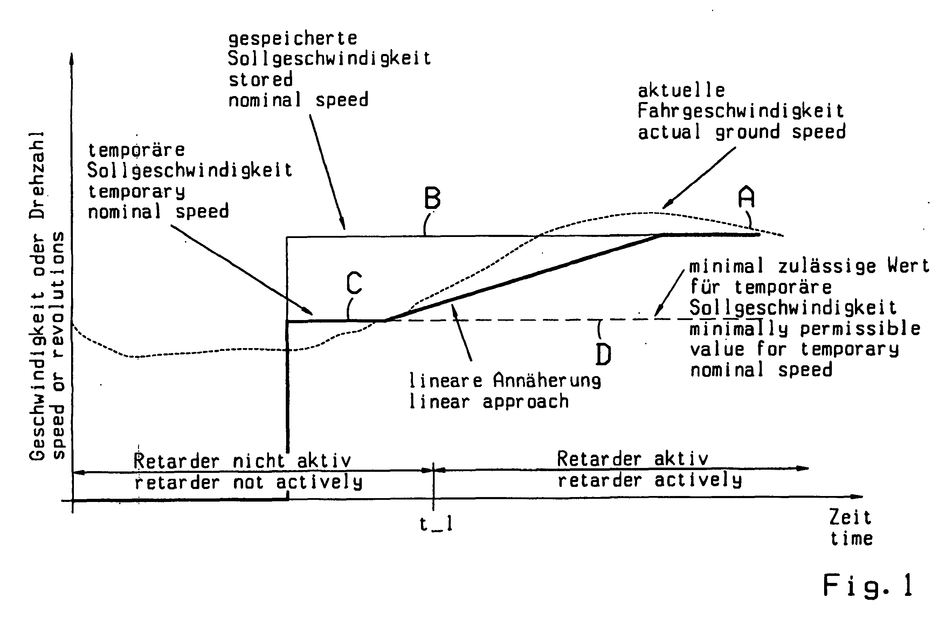

- Fig. 1: ein Diagramm, welches die temporäre Sollgeschwindigkeit, die gespeicherte Sollgeschwindigkeit, die aktuelle Fahrge- schwindigkeit sowie den Zustand des Retarders als Funkti- on der Zeit bei der Durchführung des erfindungsgemäßen Verfahrens für den Fall eines beschleunigenden Fahrzeugs und einer linearen Annäherung an die gespeicherte Sollge- schwindigkeit darstellt, und

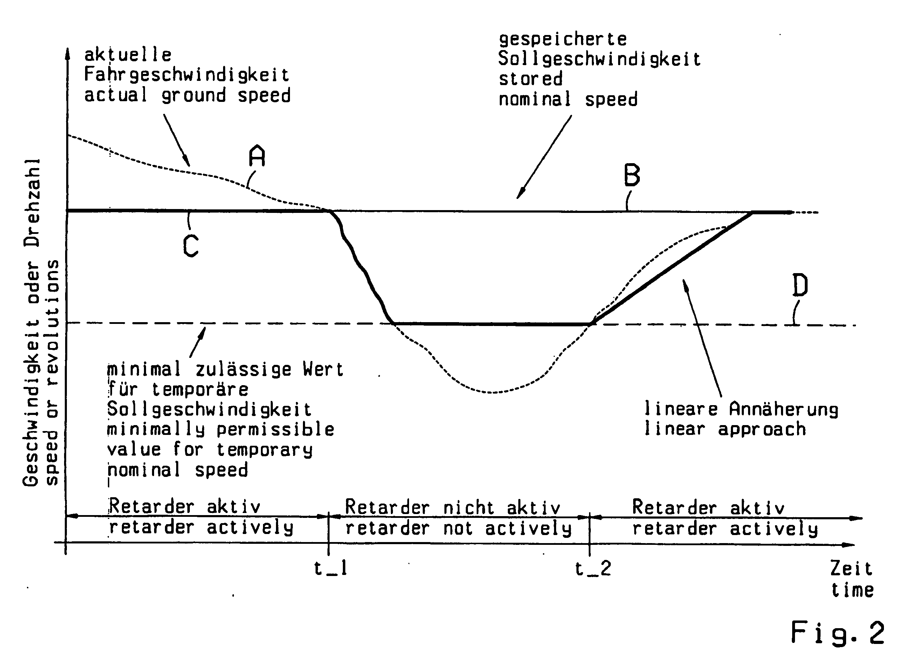

- Fig. 2: ein Diagramm, welches die temporäre Sollgeschwindigkeit, die gespeicherte Sollgeschwindigkeit, die aktuelle Fahrge- schwindigkeit sowie den Zustand des Retarders als Funkti- on der Zeit bei der Durchführung des erfindungsgemäßen Verfahrens für den Fall eines abbremsenden Fahrzeugs mit anschließendem erneuten Zuschalten des Retarders darstellt.

In Fig. 1 entspricht Kurve A der aktuellen Fahrgeschwindigkeit, Kurve B der ursprünglich gespeicherten Sollgeschwindigkeit, Kurve C der temporären Sollgeschwindigkeit und Kurve D der minimal zulässigen temporären Sollgeschwindigkeit.

Gemäß der Erfindung wird vor Erreichen der Sollgeschwindigkeit, nämlich zum Zeitpunkt t_1 der Retarder aktiviert bzw. zugeschaltet, wobei die aktu elle Fahrgeschwindigkeit als temporäre Sollgeschwindigkeit gesetzt ist und wobei die temporäre Sollgeschwindigkeit linear auf die ursprünglich gespeicherte Sollgeschwindigkeit geführt wird. In der Figur ist als Kurve D die minimal zulässige temporäre Sollgeschwindigkeit eingezeichnet, welche, wie bereits erläutert, mindestens einer evtl. eingestellten Tempomatgeschwindigkeit entspricht. Fig. 1 ist zu entnehmen, dass durch die lineare Annäherung der temporären Sollgeschwindigkeit an die gespeicherte Sollgeschwindigkeit, der Überschwinger in der Geschwindigkeit sehr gering ist.

In Fig. 2 ist der Fall veranschaulicht, bei dem bei langsamer werdendem Fahrzeug zum Zeitpunkt t_1 die ursprünglich gespeicherte Sollgeschwindigkeit unterschritten wird, so dass der Retarder abgeschaltet wird, wobei das Fahrzeug anschließend erneut beschleunigt. Wie aus Fig. 2 ersichtlich, überschreitet die aktuelle Fahrgeschwindigkeit den minimal zulässigen Wert für die temporäre Sollgeschwindigkeit zum Zeitpunkt t_2, so dass zu diesem Zeitpunkt der Retarder erneut zugeschaltet wird, wobei die aktuelle Fahrgeschwindigkeit als temporäre Sollgeschwindigkeit gesetzt wird, welche linear auf die ursprünglich gespeicherte Sollgeschwindigkeit geführt wird.

## Patentansprüche

1. Verfahren zur Steuerung und/oder Regelung der Fahrzeuggeschwindigkeit bei einem Fahrzeug, welches einen Retarder aufweist, bei dem Über schwinger in der Fahrgeschwindigkeit bezüglich einer gespeicherten Sollgeschwindigkeit beim Zuschalten des Retarders reduziert bzw. vermieden werden, **dadurch gekennzeichnet, dass** vor Erreichen der Sollgeschwindigkeit die aktuelle Fahrgeschwindigkeit als temporäre Sollgeschwindigkeit gesetzt wird, wobei die temporäre Soligeschwindigkeit mittels einer definierten Funktion auf die ursprünglich gespeicherte Sollgeschwindigkeit geführt wird und der Retarder vor Erreichen der gespeicherten Sollgeschwindigkeit zugeschaltet wird, so dass vor Erreichen der gespeicherten Sollgeschwindigkeit dessen Bremswirkung aufgebaut und die Beschleunigung des Fahrzeugs reduziert wird, wobei der Retarder vor Erreichen der Soligeschwindlgkeit derart gesteuert wird, dass bei Erreichen der gespeicherten Sollgeschwindigkeit die Fahrzeugbeschleunigung 0 m/s² beträgt.

2. Verfahren zur Steuerung und/oder Regelung der Fahrzeuggeschwindigkeit bei einem Fahrzeug, welches einen Retarder aufweist, nach Anspruch 1, **dadurch gekennzeichnet, dass** die temporäre Sollgeschwindigkeit linear auf die ursprünglich gespeicherte Sollgeschwindigkeit geführt wird.

3. Verfahren zur Steuerung und/oder Regelung der Fahrzeuggeschwindigkeit bei einem Fahrzeug, welches einen Retarder aufweist, nach Anspruch 1, **dadurch gekennzeichnet, dass** die temporäre Sollgeschwindigkeit nichtlinear auf die ursprünglich gespeicherte Sollgeschwindigkeit geführt wird.

4. Verfahren zur Steuerung und/oder Regelung der Fahrzeuggeschwindigkeit bei einem Fahrzeug, welches einen Retarder aufweist, nach Anspruch 3, **dadurch gekennzeichnet, dass** die Beschleunigung desto stärker reduziert wird, je geringer die Differenz zwischen der aktuellen Geschwindigkeit und der Sollgeschwindigkeit ist, so dass bei Erreichen der Sollgeschwindigkeit die Beschleunigung den Wert Null annimmt

5. Verfahren zur Steuerung und/oder Regelung der Fahrzeuggeschwindigkeit bei einem Fahrzeug, welches einen Retarder aufweist, nach einem der vorangehenden Ansprüche, **dadurch gekennzeichnet, dass** die als temporäre Sollgeschwindigkeit gesetzte aktuelle Fahrgeschwindigkeit nur dann auf die ursprünglich gespeicherte Sollgeschwindigkeit geführt wird, wenn die aktuelle Fahrgeschwindigkeit größer als die linear bzw. nichtlinear steigende temporäre Sollgeschwindigkeit Ist.

6. Verfahrens zur Steuerung und/oder Regelung der Fahrzeuggeschwindigkeit bei einem Fahrzeug, welches einen Retarder aufweist, nach einem der vorangehenden Ansprüche, **dadurch gekennzeichnet, dass** für den Fall, dass die aktuelle Geschwindigkeit zu langsam oder gar nicht steigt, die temporäre Sollgeschwindigkeit nicht auf die gespeicherte Sollgeschvilndigkek geführt wird, wobei als temporäre Sollgeschwindigkeit entweder die aktuelle Fahrgeschwindigkeit oder eine Geschwindigkeit zwischen der aktuellen Fahrgeschwindigkeit und der gespeicherten Sollgeschwindigkeit gesetzt wird.

7. Verfahren zur Steuerung und/oder Regelung der Fahrzeuggeschwindigkeit bei einem Fahrzeug, welches einen Retarder aufweist, nach einem der vorangehenden Ansprüche, **dadurch gekennzeichnet, dass**, wenn bei abbremsendem Fahrzeug und Unterschreiten der ursprünglich gespeicherten Sollgeschwindigkeit die Retarder-Geschwindigkeits-mgelung abschaltet, die temporäre Sollgeschwindigkeit auf einen Wert unterhalb der gespeicherten Sollgeschwindigkeit gesetzt wird, wobei der Wert für die temporäre Sollgeschwindigkeit der aktuellen Fahrgeschwindigkeit oder einem definierten Wert zwischen der aktuellen Fahrgeschwindigkeit und der gespeicherten Sollgeschwindigkeit entspricht.

8. Verfahren zur Steuerung und/oder Regelung der Fahrzeuggeschwindigkeit bei einem Fahrzeug, welches einen Retarder aufweist, nach einem der vorangehenden Ansprüche, **dadurch gekennzeichnet, dass** der temporäre Sollgeschwindigkeitswert stets größer als eine eventuell gesetzte Tempomatgeschwindigkeit ist.

9. Verfahren zur Steuerung und/oder Regelung der Fahrzeuggeschwindigkeit bei einem Fahrzeug, welches einen Retarder aufweist, nach einem der vorangehenden Ansprüche, **dadurch gekennzeichnet, dass** die Retardersteuerung aktuelle Motorinformationen überwacht und gegebenenfalls den Retarder abschaltet oder den Sollgeschwindigkeitswert der Retarder-Geschwindigkeitsregelung anhebt.

10. Verfahren zur Steuerung und/oder Regelung der Fahrzeuggeschwindigkeit bei einem Fahrzeug, welches einen Retarder aufweist, nach einem der vorangehenden Ansprüche, **dadurch gekennzeichnet, dass** die Retardersteuerung in Abhängigkeit von Motorinformationen in die Motorsteuerung eingreift, um das Motormoment zu reduzieren und/oder die gesetzte Tempomatgeschwindigkeit zu senken.

## Claims

1. Method for controlling and/or regulating the vehicle speed of a vehicle which has a retarder, in which method overshoots in the vehicle speed in relation to a stored nominal speed are reduced or prevented upon activation of the retarder, **characterized in that**, before the nominal speed is reached, the present driving speed is set as a temporary nominal speed, with the temporary nominal speed being adjusted by means of a defined function to the originally stored nominal speed and with the retarder being activated before the stored nominal speed is reached, such that before the stored nominal speed is reached, the braking action of said retarder is built up and the acceleration of the vehicle is reduced, with the retarder being controlled, before the nominal speed is reached, in such a way that the vehicle acceleration is 0 m/s² when the stored nominal speed is reached.

2. Method for controlling and/or regulating the vehicle speed of a vehicle which has a retarder, according to Claim 1, **characterized in that** the temporary nominal speed is adjusted linearly to the originally stored nominal speed.

3. Method for controlling and/or regulating the vehicle speed of a vehicle which has a retarder, according to Claim 1, **characterized in that** the temporary nominal speed is adjusted non-linearly to the originally stored nominal speed.

4. Method for controlling and/or regulating the vehicle speed of a vehicle which has a retarder, according to Claim 3, **characterized in that** the acceleration is reduced more intensely the smaller the difference is between the present speed and the nominal speed, such that the acceleration assumes the value zero when the nominal speed is reached.

5. Method for controlling and/or regulating the vehicle speed of a vehicle which has a retarder, according to one of the preceding claims, **characterized in that** the present vehicle speed which is set as a temporary nominal speed is adjusted to the originally stored nominal speed only when the present driving speed is greater than the linearly or non-linearly increasing temporary nominal speed.

6. Method for controlling and/or regulating the vehicle speed of a vehicle which has a retarder, according to one of the preceding claims, **characterized in that**, if the present speed is increasing too slowly or not at all, the temporary nominal speed is not adjusted to the stored nominal speed, with either the present driving speed or a speed between the present driving speed and the stored nominal speed being set as a temporary nominal speed.

7. Method for controlling and/or regulating the vehicle speed of a vehicle which has a retarder, according to one of the preceding claims, **characterized in that**, if the retarder speed regulation is deactivated when the vehicle is braking and the originally stored nominal speed is undershot, the temporary nominal speed is set to a value below the stored nominal speed, with the value for the temporary nominal speed corresponding to the present driving speed or to a defined value between the present driving speed and the stored nominal speed.

8. Method for controlling and/or regulating the vehicle speed of a vehicle which has a retarder, according to one of the preceding claims, **characterized in that** the temporary nominal speed is always greater than any set cruise-control speed.

9. Method for controlling and/or regulating the vehicle speed of a vehicle which has a retarder, according to one of the preceding claims, **characterized in that** the retarder controller monitors present engine information and if appropriate deactivates the retarder or increases the nominal speed value of the retarder speed regulation.

10. Method for controlling and/or regulating the vehicle speed of a vehicle which has a retarder, according to one of the preceding claims, **characterized in that**, as a function of engine information, the retarder controller intervenes in the engine controller in order to reduce the engine torque and/or reduce the set cruise-control speed.

## Revendications

1. Procédé de commande et/ou de régulation de la vitesse du véhicule sur un véhicule qui présente un ralentisseur, selon lequel les dépassements impulsionnels dans la vitesse de déplacement par rapport à une vitesse de consigne lors de la mise en circuit du ralentisseur sont réduits ou évités, **caractérisé en ce que** la vitesse de déplacement actuelle est définie comme vitesse de consigne temporaire avant d'atteindre la vitesse de consigne, la vitesse de consigne temporaire étant amenée au moyen d'une fonction définie à la vitesse de consigne mémorisée à l'origine et le ralentisseur étant mis en circuit avant d'atteindre la vitesse de consigne mémorisée de sorte que son effet de freinage soit relâché et l'accélération du véhicule réduite avant d'atteindre la vitesse de consigne mémorisée, le ralentisseur étant commandé avant d'atteindre la vitesse de consigne de telle sorte que lorsque la vitesse de consigne mémorisée est atteinte, l'accélération du véhicule soit de 0 m/s².

2. Procédé de commande et/ou de régulation de la vitesse du véhicule sur un véhicule qui présente un ralentisseur selon la revendication 1, **caractérisé en ce que** la vitesse de consigne temporaire est amenée de manière linéaire à la vitesse de consigne mémorisée à l'origine.

3. Procédé de commande et/ou de régulation de la vitesse du véhicule sur un véhicule qui présente un ralentisseur selon la revendication 1, **caractérisé en ce que** la vitesse de consigne temporaire est amenée de manière non linéaire à la vitesse de consigne mémorisée à l'origine.

4. Procédé de commande et/ou de régulation de la vitesse du véhicule sur un véhicule qui présente un ralentisseur selon la revendication 3, **caractérisé en ce que** l'accélération est d'autant plus fortement réduite que la différence entre la vitesse actuelle et la vitesse de consigne est faible, de sorte que l'accélération prenne la valeur zéro en atteignant la vitesse de consigne.

5. Procédé de commande et/ou de régulation de la vitesse du véhicule sur un véhicule qui présente un ralentisseur selon l'une des revendications précédentes, **caractérisé en ce que** la vitesse de déplacement actuelle définie comme vitesse de consigne temporaire n'est amenée à la vitesse de consigne mémorisée à l'origine que si la vitesse de déplacement actuelle est supérieure à la vitesse de consigne temporaire à croissance linéaire ou non linéaire.

6. Procédé de commande et/ou de régulation de la vitesse du véhicule sur un véhicule qui présente un ralentisseur selon l'une des revendications précédentes, **caractérisé en ce que** dans le cas où la vitesse actuelle augmente trop lentement ou pas du tout, la vitesse de consigne temporaire n'est pas amenée à la vitesse de consigne mémorisée, la vitesse de consigne temporaire définie étant alors soit la vitesse de déplacement actuelle, soit une vitesse entre la vitesse de déplacement actuelle et la vitesse de consigne mémorisée.

7. Procédé de commande et/ou de régulation de la vitesse du véhicule sur un véhicule qui présente un ralentisseur selon l'une des revendications précédentes, **caractérisé en ce que** lors du freinage du véhicule et du passage au-dessous de la vitesse de consigne mémorisée à l'origine, lorsque la régulation de la vitesse à ralentisseur se désactive, la vitesse de consigne temporaire est fixée à une valeur inférieure à la vitesse de consigne mémorisée, la valeur de la vitesse de consigne temporaire correspondant à la vitesse de déplacement actuelle ou à une valeur définie entre la vitesse de déplacement actuelle et la vitesse de consigne mémorisée.

8. Procédé de commande et/ou de régulation de la vitesse du véhicule sur un véhicule qui présente un ralentisseur selon l'une des revendications précédentes, **caractérisé en ce que** la vitesse de consigne temporaire est toujours supérieure à une vitesse de régulateur de vitesse éventuellement définie.

9. Procédé de commande et/ou de régulation de la vitesse du véhicule sur un véhicule qui présente un ralentisseur selon l'une des revendications précédentes, **caractérisé en ce que** la commande du ralentisseur surveille des informations actuelles du moteur et désactive éventuellement le ralentisseur ou relève la vitesse de consigne de la régulation de vitesse à ralentisseur.

10. Procédé de commande et/ou de régulation de la vitesse du véhicule sur un véhicule qui présente un ralentisseur selon l'une des revendications précédentes, **caractérisé en ce que** la commande du ralentisseur intervient dans la commande du moteur en fonction des informations du moteur afin de réduire le couple moteur et/ou abaisser la vitesse de régulateur de vitesse définie.
